# EUROPÄISCHE PATENTANMELDUNG

(11) **EP 1 580 530 A1**
(43) Veröffentlichungstag der Anmeldung: **28.09.2005**
(21) Anmeldenummer: 05004610.1
(22) Anmeldetag: 03.03.2005
(51) Int. Cl.: G01C 21/34

(54) **Vorrichtung für ein Kraftfahrzeug, für das Vermeiden eines unbeabsichtigten vollständigen Verbrauchs der Kraftstoffreserven des Kraftfahrzeugs**

(30) Priorität: 26.03.2004 DE 102004015389
(71) Anmelder: DaimlerChrysler AG, 70567 Stuttgart (DE)
(72) Erfinder: Mehren, Dirk, 71069 Sindelfingen (DE)

(57) **Zusammenfassung**

Die Erfindung betrifft eine Vorrichtung (1) für ein Kraftfahrzeug, mit der das unbeabsichtigte vollständige Verbrauchen der Kraftstoffreserven eines Kraftfahrzeugs vermieden werden soll. Die Vorrichtung ist mit einem Sensor (2) zur Ermittlung der im Fahrzeug vorhandenen Kraftstoffmenge versehen. Weiterhin zeigt es ein Navigationsgerät (4), das bei Unterschreiten einer Mindestkraftstoffmenge aktiviert wird und die aktuelle Position des Fahrzeuges automatisiert bestimmt. Aus der Position des Fahrzeuges wird die aktuelle Fahrtrichtung und/oder die Straße, auf der sich das Fahrzeug aktuell befindet, bestimmt. Anhand dieser Informationen wird eine Tankstelle in Richtung oder im Verlauf der bestimmten Straße ermittelt und eine Routenführung an diese ermittelte Tankstelle als Ziel aktiviert und der Fahrzeugführer mit entsprechenden Verkehrshinweisen versorgt. Durch diese Vorgehensweise ist auch bei nicht aktivierten Navigationsgerät ein unbeabsichtigtes vollständiges Verbrauchen der Kraftstoffreserven weitgehend verhindert.

## Beschreibung

Die Erfindung betrifft eine Vorrichtung für ein Kraftfahrzeug, für das Vermeiden eines unbeabsichtigten vollständigen Verbrauchs der Kraftstoffreserven des Kraftfahrzeugs.

Es ist bekannt, dass bei Unterschreiten einer Mindestkraftstoffmenge in einem Kraftfahrzeug eine Tankreserveanzeige aktiviert wird, die typisch als Farbleuchte bzw. als ein Piktogramm beispielsweise in Form einer Tanksäule realisiert ist. Diese Tankreserveanzeige wird regelmäßig im Bereich der Kraftstoffmengenanzeige angeordnet. Mit dieser Tankreserveanzeige erhält der Kraftfahrzeugführer eine Information, dass die Kraftstoffmenge unter eine vorgegebene Mindestkraftstoffmenge gefallen ist. Die Tankreserveanzeige gibt dem Kraftfahrzeugführer einen Hinweis, dass er in nächster Zukunft eine Tankstelle zum Auffüllen der Kraftstoffmenge aufsuchen sollte.

Aus der europäischen Patentanmeldung EP 1 130 560 A2 ist eine Vorrichtung und ein Verfahren zum Betreiben eines Fahrzeuges bekannt, das mittels eines Sensors die vorhandene Kraftstoffmenge ermittelt und das bei aktiviertem Navigationsgerät, d.h. das Navigationsgerät führt den Fahrzeugführer anhand einer aktiven Routenführung von einer Ausgangsposition zu einer vorgegebenen Zielposition, bei Unterschreiten einer Mindestkraftstoffmenge eine Fahrtroute zu einer Tankstelle bestimmt und dementsprechende Fahrthinweise gibt.

Der Erfindung liegt die Aufgabe zugrunde, eine Vorrichtung gemäß dem Oberbegriff dahingehend weiterzubilden, dass sie ein unbeabsichtigtes vollständiges Verbrauchen der Kraftstoffreserven eines Kraftfahrzeugs sicherer bewirkt.

Diese Aufgabe wird erfindungsgemäß durch eine Vorrichtung für ein Kraftfahrzeug mit den Merkmalen des Patentanspruchs 1 gelöst.

Vorteilhafte Weiterbildungen sind Gegenstand der Unteransprüche.

Die erfindungsgemäße Vorrichtung zeigt ein Navigationsgerät, das bei Unterschreiten der Kraftstoffmenge unter eine Mindestkraftstoffmenge so ausgebildet und gesteuert ist, dass bei nicht aktivierte Routenführung in einem ersten Schritt die Position des Fahrzeuges bestimmt wird. Dies erfolgt typischerweise unter Verwendung von GPS-Daten oder Kartendaten oder auch unter Verwendung anderer Informationsquellen beispielsweise durch Fahrzeugsensoren oder durch andere Fahrzeugkomponenten, welche beispielsweise eine Funkkommunikation und daraus eine Ortsbestimmung ermöglichen. Anhand der Position bzw. der bestimmten Positionen des Fahrzeuges wird nun die aktuelle Fahrrichtung und/oder die Straße bestimmt, auf der sich das Fahrzeug aktuell befindet. Dabei kann alternativ oder ergänzend die aktuelle Fahrrichtung als auch die aktuelle Straße bestimmt werden. In Kenntnis dieser aktuellen Fahrrichtung und/oder der aktuellen Straße wird nun eine Tankstelle ermittelt, die in Richtung und/oder im Verlauf der bestimmten Straße liegt. Dabei wird die Richtung und/oder der Verlauf der bestimmten Straße anhand der aus der Position des Fahrzeuges bestimmten aktuellen Fahrrichtung und/oder aus der aktuellen Straße abgeleitet. Dabei kann die Richtung der aktuellen Fahrrichtung entsprechen oder auch in einem Bereich um die aktuelle Fahrrichtung liegen. In entsprechender Weise kann der Verlauf der bestimmten Straße dem konkreten Verlauf der aktuellen Straße entsprechen aber auch dem Verlauf der Verlängerung der aktuellen Straße entsprechen oder auch in einem Korridor um die aktuelle Straße oder um die Verlängerung der aktuellen Straße zuliegen kommen.

Die Ermittlung der Tankstelle bzw. die Bestimmung der Richtung oder der Verlauf der Straße wird bevorzugt unter Verwendung von Kartendaten realisiert. Nachdem die Tankstelle in Richtung und/oder im Verlauf der bestimmten Straße ermittelt wurde, wird eine Routenführung des nun aktivierten Navigationsgerätes gestartet, bei der als Ziel die ermittelte Tankstelle und die bestimmte Position des Kraftfahrzeugs als Ausgangspunkt gewählt ist.

Durch diese erfindungsgemäße Vorrichtung für ein Kraftfahrzeug ist nun sichergestellt, dass bei nicht aktiver Routenführung eines Navigationsgerätes dennoch sichergestellt ist, dass bei Unterschreiten einer Mindestkraftstoffmenge eine verlässliche Möglichkeit geschaffen ist, eine geeignete Tankstelle entsprechend der aktuellen Fahrsituation beim Unterschreiten der Mindestkraftstoffmenge aufzufinden und dem Kraftfahrzeugführer damit die Möglichkeit zu geben, das Fahrzeug sicher vor einem vollständigen Verbrauchen der Kraftstoffreserven aufzutanken.

Nach einer bevorzugten Ausbildung der Erfindung wird bei der Ermittlung der Tankstelle eine Richtung gewählt, die in einem Richtungsbereich um die aktuelle Fahrtrichtung liegt, welche weniger als 45° von der Fahrrichtung abweicht. Alternativ oder ergänzend hat es sich bewährt, einen Verlauf der Straße zu wählen, der durch einen Korridor um die bestimmte Straße oder um dessen Verlängerung festgelegt ist, wobei der Korridor durch einen Abstand zur bestimmten Straße oder deren Verlängerung insbesondere kleiner als 10 km bestimmt ist. Dabei hat es sich besonders bewährt, diesen Abstand bzw. die Abweichung von der Fahrrichtung kleiner zu wählen, je größer die Mindestkraftstoffmenge ist. Ist die Mindestkraftstoffmenge beispielsweise doppelt so groß und wird damit eine doppelt so große Reichweite erreicht, so hat es sich bewährt, den Abstand bzw. die Abweichung von der Fahrrichtung etwa zu halbieren. Dies schafft eine ausreichende Sicherheit vor unbeabsichtigten vollständigen Verbrauchens der Kraftstoffreserven bei zugleich geringer Abweichung von der zu erwartenden Fahrtrichtung.

Darüber hinaus hat es sich besonderes bewährt, bei der Ermittlung der Tankstelle nur solche zu berücksichtigen, die zusätzlich zu der Auswahl abhängig von der Richtung oder dem Verlauf der bestimmten Straße zusätzlich innerhalb einer insbesondere vorgegebenen Entfernung von der bestimmten Position des Fahrzeuges angeordnet sind. Alternativ dazu hat es sich auch bewährt, zusätzlich zu der Richtungs- oder verlaufsabhängigen Selektion von Tankstellen zusätzlich das Kriterium der geringsten Entfernung anzuwenden, so dass die nächstgelegene Tankstelle in der vorgegebenen Richtung und/oder im Verlauf der bestimmten Straße gewählt bzw. ermittelt wird. Bei der vorgegebenen Entfernung haben sich insbesondere Entfernungen im Bereich von 50 bis 70 km bewährt. Durch diese bevorzugte Ausbildung der Erfindung ist eine noch höhere Betriebssicherheit des Fahrzeuges gegeben.

Nach einer besonders bevorzugten Ausbildung dieser Erfindung, wird die vorgegebene Entfernung von der Position des Fahrzeuges, in der eine Tankstelle ermittelt wird, kraftstoffmengenabhängig und fakultativ zusätzlich kraftstoffverbrauchsabhängig gewählt. Bei geringer verbleibender Kraftstoffmenge wird die vorgegebene Entfernung geringer gewählt bzw. bei höherem Kraftstoffverbrauch die vorgegebene Entfernung in entsprechender Weise ebenso geringer gewählt bzw. umgekehrt bei höherer Kraftstoffmenge oder geringem Kraftstoffverbrauch die vorgegebene Entfernung höher gewählt. Durch diese Anpassung der vorgegebenen Entfernung, in der eine Tankstelle gewählt werden kann, ist eine noch weiter erhöhte Sicherheit vor einem unbeabsichtigten vollständigen Verbrauchens der Kraftstoffreserven eines Kraftfahrzeuges gegeben. Ein sehr unangenehmes und ggf. gefährliches Liegenbleiben des Fahrzeuges aufgrund eines leeren Kraftstoffbehälters kann damit weitgehend ausgeschlossen sein.

Diese Sicherheit kann durch eine besonders bevorzugte Ausbildung der Erfindung weiter erhöht werden, in dem die vorgegebene Entfernung so gewählt ist, dass noch eine Restkraftstoffmenge beim geplanten Erreichen der Tankstelle im Kraftfahrzeug vorhanden ist. Dies kann dadurch erreicht werden, dass bei der Bestimmung der vorgegebenen Entfernung nicht die vorhandene Kraftstoffmenge Berücksichtigung findet, sondern eine um die Restkraftstoffmenge verminderte Kraftstoffmenge, welche geringer als die Mindestkraftstoffmenge ist. Durch diese Ausbildung ist sichergestellt, dass bei unerwarteten Situationen, beispielsweise bei Nichtvorhandensein einer geöffneten und funktionsfähigen Tankstelle am Ziel bzw. am Ende der Routenführung noch eine ausreichende Restkraftstoffmenge vorhanden ist, die ein Erreichen einer weiteren Tankstelle im Bereich der ermittelten Tankstelle ermöglichen kann.

Darüber hinaus hat es sich besonders bewährt, eine Ausgabe für Fahrhinweise vorzusehen, die so ausgebildet und betrieben wird, dass solange keine Anweisung zur Abweichung von der aktuellen, befahrenen Straße oder von der aktuellen Fahrrichtung erfolgt, eine Information über die Entfernung zur ermittelten Tankstelle oder bzw. und die aktuelle Kraftstoffmenge ausgegeben wird. Durch diese Information hat der Kraftfahrzeugführer eine sehr verlässliche Information über den aktuellen Zustand des Fahrzeuges im Hinblick auf die vorhandene Kraftstoffmenge bzw. die Entfernung zu der ermittelten Tankstelle, an der das Auffüllen der Kraftstoffmenge ermöglicht bzw. geplant ist. Durch das erfindungsgemäße Umschalten zwischen den Fahrthinweisen und der Entfernung zur ermittelten Tankstelle bzw. der Kraftstoffmenge gelingt es, die Belastung des Fahrers zu begrenzen und ihm die für ihn relevanten bzw. wichtigsten Informationen über die Ausgabe der Vorrichtung zur Verfügung zu stellen. Unnötige Informationen werden hierdurch dem Fahrer nicht zur Verfügung gestellt, so dass dieser nicht durch diese abgelenkt wird. Dies erhöht zusätzlich die Fahrzeugsicherheit.

Darüber hinaus hat es sich besonders bewährt, die Vorrichtung so zu betreiben, dass erst beim Unterschreiten der Mindestkraftstoffmenge das Navigationsgerät in Betrieb genommen wird. Hierdurch gelingt es, den Energieverbrauch der Vorrichtung für ein Kraftfahrzeug zu reduzieren, was die Betriebssicherheit des Fahrzeuges weiter erhöht. Mit dem Unterschreiten der Mindestkraftstoffmenge wird das Navigationsgerät in Betrieb genommen und anschließend die Position des Fahrzeuges bestimmt, daraus die aktuelle Fahrtrichtung und bzw. oder die Straße, auf der sich das Fahrzeug befindet, bestimmt. Anhand dieser Fahrtrichtungs- oder bestimmten Straßeninformation wird dann die geeignete Tankstelle ermittelt, an welcher der Fahrzeugführer bevorzugt seine Kraftstoffreserven auffüllen kann. Hierdurch gelingt es, ein Liegenbleiben des Kraftfahrzeuges aufgrund eines vollständigen Verbrauchs der Kraftstoffreserven mit verlässlicher Sicherheit auszuschließen.

Im folgenden wird die vorliegende Erfindung anhand eines bevorzugten Ausführungsbeispiels der erfindungsgemäßen Vorrichtung erläutert. Die Erfindung ist nicht auf dieses bevorzugte Ausführungsbeispiel beschränkt.

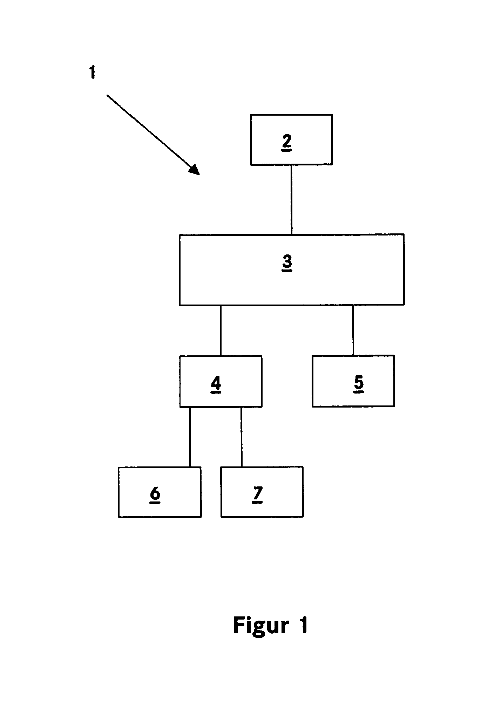

- Fig. 1: zeigt den schematischen Aufbau einer erfindungs- gemäßen Vorrichtung für ein Kraftfahrzeug, für das Vermeiden eines unbeabsichtigten vollständigen Verbrauchs der Kraftstoffreserven des Kraftfahrzeuges.

Die erfindungsgemäße beispielhafte Vorrichtung 1 für ein Kraftfahrzeug zur Vermeidung eines unbeabsichtigten vollständigen Verbrauchens der Kraftstoffreserven des Fahrzeuges zeigt einen Sensor 2 zur Ermittlung der im Fahrzeug vorhandenen Kraftstoffmenge. Der Sensor 2 ist mit einer Steuereinheit 3 der Vorrichtung 1 verbunden. Die Vorrichtung zeigt weiterhin ein Navigationsgerät 4, das geeignet ist, eine Fahrtroute von einem Ausgangspunkt zu einem Ziel zu berechnen und dem Fahrer entsprechende Fahrhinweise mittels einer Ausgabeeinheit 5, auszugeben. Die Ausgabeeinheit 5 ist als Display zur grafischen Ausgabe von Fahrhinweisen bzw. als akustische Ausgabe zur Vermittlung von Sprachhinweisen ausgebildet ist. Dem Navigationsgerät 4 ist eine Ortungseinheit 6 in Form eines Global Positioning Systems 6 und eine Speichereinheit 7 für Kartendaten zugeordnet.

Unterschreitet die Kraftstoffmenge eine vorgegebene Mindestkraftstoffmenge und wird diese durch den Sensor 2 erfasst, der regelmäßig die Kraftstoffmenge misst, so wird mittels der Steuereinheit 3 das Navigationsgerät 4 in Betrieb genommen, d.h. entweder vollständig mit Strom versorgt oder aus einem Stand-by-Zustand aufgeweckt, so dass das Navigationsgerät 4 in Verbindung mit dem Ortungssystem 6 und dem Speicher 7 die aktuelle Position des Fahrzeuges bestimmen kann und anhand der aktuellen Position die aktuelle Fahrtrichtung und darüber hinaus zusätzlich die Straße, auf der sich das Fahrzeug aktuell befindet, bestimmen kann. Auf Basis der aktuellen Fahrrichtung und der aktuellen Straße wird nun eine Tankstelle anhand der im Speicher 7 vorhandenen Kartendaten ermittelt, die im wesentlichen in der bestimmten Richtung und dem Verlauf der bestimmten Straße liegt. Dabei wird insbesondere ein Korridor um die bestimmte, aktuelle Straße oder deren Verlängerung berücksichtigt bzw. ein Winkelbereich um die bestimmte Fahrtrichtung berücksichtigt. Nachdem eine Tankstelle auf Basis der vorbeschriebenen Selektionskriterien unter Verwendung der Kartendaten in dem Speicher 7 ermittelt wurde, wird eine Routenführung in dem Navigationsgerät 4 aktiviert, für die als Ausgangspunkt die bestimmte Position des Fahrzeuges und als Ziel Ausgangspunkt die Position der ermittelten Tankstelle gewählt wurde.

Anhand der nun aktivierten Routenführung zu der ermittelten Tankstelle wird nun dem Fahrer bei zuvor nicht aktiviertem Navigationsgerät bzw. bei nicht aktivierter Routenführung die notwendigen Fahrhinweise zum sicheren Erreichen einer geeigneten Tankstelle gegeben. Durch diese Fahrhinweise, die sowohl akustisch als auch optisch dem Fahrzeugführer zur Verfügung gestellt werden, gelingt es, ein unbeabsichtigtes vollständiges Verbrauchen der Kraftstoffreserven zu verhindern und damit ein besonders störendes und gefährliches Liegenbleiben des Kraftfahrzeuges insbesondere auf einer Autobahn oder in Tunneln oder ähnliches zu verhindern. Mithin gelingt es, die Verkehrssicherheit für den Fahrzeugführer und den Insassen sowie für das Fahrzeug und für die anderen Verkehrsteilnehmer zu erhöhen.

## Patentansprüche

1. Vorrichtung für ein Kraftfahrzeug, für das vermeiden eines unbeabsichtigten vollständigen Verbrauches der Kraftstoffreserven des Kraftfahrzeuges,
mit einem Sensor zur Ermittlung der im Fahrzeug vorhandenen Kraftstoffmenge,
mit einem Navigationsgerät, das geeignet ist, bei Unterschreiten einer Mindestkraftstoffmenge eine Fahrroute zu einer Tankstelle zu bestimmen und entsprechende Fahrhinweise auszugeben,
**dadurch gekennzeichnet,**
**dass** das Navigationsgerät so gesteuert ist,
**dass** bei nichtaktivierter Routenführung die Position des Fahrzeuges und daraus die aktuelle Fahrrichtung und/oder die Straße, auf der sich das Fahrzeug aktuell befindet, bestimmt wird,
**dass** eine Tankstelle in Richtung und/oder im Verlauf der bestimmten Straße ermittelt wird, wobei die Richtung aus der bestimmten Fahrrichtung und der Verlauf der Straße aus der bestimmten Straße abgeleitet werden,
und **dass** eine Routenführung mit der ermittelten Tankstelle als Ziel und die bestimmte Position als Ausgangspunkt aktiviert wird.

2. Vorrichtung für ein Kraftfahrzeug nach Anspruch 1,
**dadurch gekennzeichnet,**
**dass** bei der Ermittlung der Tankstelle eine Richtung in einem Richtungsbereich um die Fahrrichtung gewählt wird, die weniger als 45 Grad abweicht ,
und/oder ein Verlauf der Straße gewählt wird, der durch einen Korridor um die bestimmte Straße oder um dessen Verlängerung festgelegt ist, wobei der Korridor durch einen Abstand zur Straße oder deren Verlängerung kleiner als 10 km bestimmt ist.

3. Vorrichtung für ein Kraftfahrzeug nach Anspruch 1 oder 2,
**dadurch gekennzeichnet,**
**dass** eine Tankstelle ermittelt wird, die zusätzlich innerhalb einer insbesondere vorgegeben Entfernung von der Position des Fahrzeuges angeordnet ist oder die zusätzlich die nächstgelegene Tankstelle ist.

4. Vorrichtung für ein Kraftfahrzeug nach Anspruch 3,
**dadurch gekennzeichnet,**
**dass** die vorgegeben Entfernung kraftstoffmengenabhängig gewählt ist.

5. Vorrichtung für ein Kraftfahrzeug nach Anspruch 4,
**dadurch gekennzeichnet,**
**dass** die vorgegeben Entfernung kraftstoffmengenabhängig und kraftstoffverbrauchsabhängig so gewählt ist, dass insbesondere eine Restkraftstoffmenge beim geplanten Erreichen der Tankstelle im Kraftfahrzeug vorhanden ist.

6. Vorrichtung für ein Kraftfahrzeug nach einem der vorstehenden Ansprüche,
**dadurch gekennzeichnet,**
**dass** eine Ausgabe vorgesehen ist, mittels derer die Entfernung zur ermittelten Tankstelle oder die Kraftstoffmenge ausgegeben wird, solange keine Anweisung zur Abweichung von der aktuellen befahrenen Straße oder von der aktuellen Fahrrichtung erfolgt.

7. Vorrichtung für ein Kraftfahrzeug nach einem der vorstehenden Ansprüche,
**dadurch gekennzeichnet,**
**dass** erst bei Unterschreiten einer Mindestkraftstoffmenge das Navigationsgerät in Betrieb genommen wird.
